# EUROPEAN PATENT SPECIFICATION

(11) **EP 3 026 029 B1**
(45) Date of publication and mention of the grant of the patent: **27.02.2019**
(21) Application number: 14828668.5
(22) Date of filing: 25.07.2014
(51) Int. Cl.: C03C 13/00, D01F 9/08, C03C 3/062, C03C 13/06, C04B 35/622, C03C 3/087

(54) **HEAT-RESISTANT INORGANIC FIBER**
WÄRMEBESTÄNDIGE ANORGANISCHE FASER
FIBRES INORGANIQUES RÉSISTANTE À LA CHALEUR

(30) Priority: 25.07.2013 JP 2013154894
(43) Date of publication of application: 01.06.2016
(73) Proprietor: Nichias Corporation, Tokyo 104-8555 (JP)
(72) Inventor: IWATA, Koji, Tokyo 104-8555 (JP); KITAHARA, Hideki, Tokyo 104-8555 (JP); MOCHIDA, Takahito, Tokyo 104-8555 (JP); YONAIYAMA, Ken, Tokyo 104-8555 (JP); SOEDA, Kazuki, Tokyo 104-8555 (JP); MIKI, Tatsuro, Tokyo 104-8555 (JP)
(74) Representative: Schmitz, Joseph
(86) International application number: PCT/JP2014/003929
(87) International publication number: WO 2015/011930

(56) References cited:
- WO-A1-97/29057
- DE-A1- 19 840 393
- FR-A1- 2 823 501
- JP-A- 2002 512 937
- JP-A- 2002 513 730
- JP-A- 2003 527 287
- JP-A- 2008 534 420
- JP-A- 2011 504 448
- US-A1- 2010 264 352

## Description

### Technical Field

The invention relates to bio-soluble inorganic fibers having excellent heat resistance.

### Background Art

Asbestos have been used as a heat-resistant sealing material, for example, since it is light in weight and has excellent heat resistance. However, use of asbestos is inhibited since it causes disorders of lungs. Therefore, instead of asbestos, ceramic fibers or the like have been used. It is thought that, ceramic fibers or the like have excellent heat resistance which is equivalent to that of asbestos, and no health problem may occur as long as it is handled appropriately. However, there is a trend that a higher degree of safety is required. Under such circumstances, various bio-soluble fibers have been developed in order to realize bio-soluble fibers which do not cause or hardly causes health problems even if it is inhaled in a human body (see Patent Documents 1, 2 and 3, for example).

Most of commercially-available bio-soluble fibers have a high degree of solubility in physiological saline of pH 7.4. On the other hand, it is known that when fibers are inhaled in the lung, they are captured by macrophages. At the same time, it is known that the pH around macrophages is 4.5. Therefore, it is expected that the fibers having high solubility in physiological saline having pH of 4.5 are dissolved and decomposed in the lungs.

In addition, like asbestos, conventional inorganic fibers are secondary processed into a shaped product or an unshaped product together with various binders or additives, and are used as a joint in a heat treating apparatus, a furnace such as an industrial furnace, an incinerator or the like, a joint which fills the gap of a refractory tile, an insulating brick, a shell, and a refractory mortar, a sealing material, a packing material, a cushion material, an insulating material, or the like. In many cases, the inorganic fibers are exposed to high temperatures, and they are required to have heat resistance.

Further, in many cases, alumina is used as elements in a furnace. There was a problem that fibers contained in a secondary-processed product react with the alumina, thereby causing the secondary product or the element to adhere and melt.

Further, even if inorganic fibers with a specific composition have excellent properties such as bio-solubility, the fibers are sometimes difficult to be produced. Easiness in making materials to fibers and good fiber state are required for industrial production and use.

### Related Art Documents

### Patent Documents

Patent Document 1: Japanese Patent No. 3753416
Patent Document 2: JP-T-2005-514318
Patent Document 3: JP-T-2010-511105

DE 198 40 393 A1 relates to and discloses mineral fibers comprising of from 46% to 58 % of SiO₂, of from 1% to 3% of Al₂O₃, of from 0% to 30% of MgO, and of from 0% to 10% of K₂O.

FR 2 823 501 A1 relates to and discloses mineral fibers comprising of from 35% to 45 % of SiO₂, of from 6% to 16% of Al₂O₃, of from 13% to 30% of MgO, and of from 0.1% to 8% of the combined amount of K₂O and Na₂O.

WO 97/29057 A1 relates to and discloses mineral fibers comprising of from 30 wt% to less than 51 wt% of SiO₂, of from 11.5 wt% to 25 wt% of Al₂O₃, of from 2 wt% to 23 wt% of CaO, and of from 0 wt% to 15 wt% of MgO and up to 19 wt% of the combined amount of K₂O and Na₂O.

EP 0 994 647 B1 relates to and discloses mineral fibers in which SiO₂, Al₂O₃, MgO and Na₂O are the main components.

US2010/264352 A1 relates to and discloses melt formed mineral fibers in which SiO₂, Al₂O₃, MgO and K₂O are the main components but which have a content of Al₂O₃ below 20 wt%.Summary of the Invention

An object of the invention is to provide novel bio-soluble inorganic fibers that have fibrillization facility (easiness in forming a raw material to fiber), good fiber state and resistance to reacting with alumina (alumina-reactivity resistance).

According to the invention, the following inorganic fibers are provided.
1. Inorganic fibers comprising K₂O, MgO, SiO₂ and Al₂O₃ as main components, wherein the amounts of K₂O, MgO, SiO₂ and Al₂O₃ satisfy the following composition;
   K₂O: 5 to 30 wt%,
   MgO: 5 to 30 wt%,
   Al₂O₃: 20 to 65 wt%, and
   SiO₂: 10 to 52 wt%.
2. The inorganic fibers according to 1, wherein the total amount of K₂O, MgO, SiO₂ and Al₂O₃ is 95 wt% or more.
3. The inorganic fibers according to 1, wherein the amounts of K₂O, MgO, SiO₂ and Al₂O₃ satisfy the following composition;
   K₂O: 22 to 30 wt%,
   MgO: 9 to 15 wt%,
   Al₂O₃: 21 to 32 wt%, and
   SiO₂: 26 to 42 wt%.
4. The inorganic fibers according to 1, wherein the amounts of K₂O, MgO, SiO₂ and Al₂O₃ satisfy the following composition;
   K₂O: 8 to 15 wt%,
   MgO: 6 to 12 wt%,
   Al₂O₃: 51 to 65 wt%, and
   SiO₂: 11 to 27 wt%.
5. The inorganic fibers according to 1, wherein the amounts of K₂O, MgO, SiO₂ and Al₂O₃ satisfy the following composition;
   K₂O: 24 to 30 wt%,
   MgO: 11 to 13 wt%,
   Al₂O₃: 23 to 30 wt%, and
   SiO₂: 28 to 40 wt%.
6. The inorganic fibers according to any one of 1 to 5, wherein the mole ratio of K₂O and Al₂O₃, K₂O/Al₂O₃ is 0.6 to 1.25.
7. The inorganic fibers according to any one of 1 to 5, wherein the mole ratio of K₂O and Al₂O₃, K₂O/Al₂O₃ is 0.4 or less.
8. The inorganic fibers according to any one of 1 to 7, which comprise MgO; or MgO and at least one selected from Na₂O, K₂O, CaO and BaO; in the following amount:

   Na₂O+K₂O+MgO+CaO+BaO > 18 wt%.
9. The inorganic fibers according to any one of 1 to 8, which do not comprise B₂O₃ in an amount equal to or more than an impurity amount.
10. The inorganic fibers according to any one of 1 to 9, which do not react with alumina at 600°C.
11. The inorganic fibers according to any one of 1 to 10, which have an average fiber diameter of 10 µm or less.
12. The inorganic fibers according to any one of 1 to 11, which have a solubility of 10 ng/cm²·h or more in physiological saline having a pH of 4.5 or a pH of 7.4.
13. A secondary product or a composite material produced by using the inorganic fibers according to any one of 1 to 12.

According to the invention, it is possible to provide novel bio-soluble inorganic fibers that have fibrillization facility, good fiber state and alumina-reactivity resistance.

### Mode for Carrying out the Invention

The inorganic fibers of the invention contain K₂O, MgO, SiO₂ and Al₂O₃ as main components. The "as the main components" means that, of the all components contained in the inorganic fibers, the four components which have the largest contents (wt%) are K₂O, MgO, SiO₂ and Al₂O₃.

The inorganic fibers, the amounts of K₂O, MgO, SiO₂ and Al₂O₃ are in the following ranges, respectively;
K₂O: 5 to 30 wt%,
MgO: 5 to 30 wt%,
Al₂O₃: 20 to 65 wt%, and
SiO₂: 10 to 52 wt%.

For the inorganic fibers, the amount of SiO₂ is 10 wt% to 52 wt%, for example, preferably 10 wt% to 45 wt%, more preferably 13 wt% to 38 wt%, further preferably 30 wt% to 38 wt%, and 13 wt% to 30 wt%.

For the inorganic fibers, the amount of Al₂O₃ is 20 wt% to 65 wt%, for example, preferably 20 wt% to 60 wt%.

For the fibers, the amount of K₂O is 5 wt% to 30 wt%, for example, preferably 10 wt% to 30 wt%, more preferably 10 wt% to 15 wt%, and 20 wt% to 30 wt%.

For the inorganic fibers, the amount of MgO may be 5 wt% to 20 wt%, for example, preferably 5 wt% to 15 wt%, and more preferably 7 wt% to 12.8 wt%.

The amounts of K₂O, MgO, SiO₂ and Al₂O₃ are preferably in the following ranges, respectively;
K₂O: 22 to 30 wt%,
MgO: 9 to 15 wt%,
Al₂O₃: 21 to 32 wt%, and
SiO₂: 26 to 42 wt%.

The inorganic fibers of the invention contain K₂O, MgO, SiO₂ and Al₂O₃ as main components wherein the amounts of K₂O, MgO, SiO₂ and Al₂O₃ may satisfy the following composition:
K₂O: 8 to 15 wt%,
MgO: 6 to 12 wt%,
Al₂O₃: 51 to 65 wt%, and
SiO₂: 11 to 27 wt%.

The inorganic fibers can have the following composition:
K₂O: 24 to 30 wt%,
MgO: 11 to 13 wt%,
Al₂O₃: 23 to 30 wt%, and
SiO₂: 28 to 40 wt%.

For the inorganic fibers of the invention, the relation between K₂O/Al₂O₃ mole ratio and heat shrinkage ratio (heat resistance) is that if the mole ratio is 0.60 or less, or 0.60 or more, the heat resistance tends to increase. Where the mole ratio is 0.60 or more, particularly 0.80 or more, 1.0 or more or 1.25 or less, the heat resistance becomes enhanced. Where the mole ratio is 0.60 or less, particularly 0.40 or less or 0.30 or less, the heat resistance becomes enhanced.

Where the amount of SiO₂ is 45 wt% or less, the heat resistance becomes enhanced.

If the inorganic fibers of invention have the following Composition 1 or Composition 2, the heat resistance increases:
Composition 1
   K₂O: 22 to 30 wt%,
   MgO: 9 to 15 wt%,
   Al₂O₃: 21 to 32 wt%, and
   SiO₂: 26 to 42 wt%,
   preferably,
   K₂O: 24 to 30 wt%,
   MgO: 11 to 13 wt%,
   Al₂O₃: 23 to 30 wt%, and
   SiO₂: 28 to 40 wt%.
Composition 2
   K₂O: 8 to 15 wt%,
   MgO: 6 to 12 wt%,
   Al₂O₃: 51 to 65 wt%, and
   SiO₂: 11 to 27 wt%,
   preferably,
   K₂O: 10 to 13 wt%,
   MgO: 8 to 10 wt%,
   Al₂O₃: 53 to 65 wt%, and
   SiO₂: 13 to 25 wt%.

The total of K₂O, MgO, SiO₂ and Al₂O₃ may be 80 wt% or more, 85 wt% or more, 90 wt% or more, 95 wt% or more, 98 wt% or more, 99 wt% or more or 100 wt% (however, impurities which have been inevitably mixed in may be contained).

The rest other than specific components is an oxide of other elements, impurities or the like.

The inorganic fibers of the invention may or may not contain an oxide of a metal selected from Sc, La, Ce, Pr, Nd, Sm, Eu, Gd, Tb, Dy, Ho, Er, Tm, Yb, Lu, Y or a mixture thereof. The amount of these oxides may be 5 wt% or less, 3 wt% or less, 2 wt% or less, 1 wt% or less or 0.5 wt% or less.

The alkaline metal oxide (Na₂O, Li₂O or the like) may or may not be contained. The amount thereof can be, independently or in total, 5 wt% or less, 3 wt% or less, 2 wt% or less, 1 wt% or less or 0.5 wt% or less.

Each of TiO₂, ZnO, B₂O₃, P₂O₅, CaO, SrO, BaO, Cr₂O₃, ZrO₂ and Fe₂O₃ may or may not be contained. The amount thereof can be 20 wt% or less, 18 wt% or less, 15 wt% or less, 10 wt% or less, 7 wt% or less, 5 wt% or less, 3 wt% or less, 2 wt% or less, 1 wt% or less or 0.5 wt% or less.

The inorganic fibers do not preferably contain B₂O₃ in an amount equal to or exceeding an amount as an impurity. The amount of B₂O₃ is preferably 3 wt% or less.

Each of non-oxide materials such as carbides and nitrides may be contained. The amount thereof can be 5 wt% or less, 3 wt% or less, 2 wt% or less, 1 wt% or less or 0.5 wt% or less. The atmosphere at the time of melting may be an inert atmosphere or a reducing atmosphere.

The inorganic fibers of the invention may contain MgO; or MgO and at least one selected from Na₂O, K₂O, CaO and BaO; in the following amount:

Na₂O+K₂O+MgO+CaO+BaO > 18 wt%.

By satisfying the above amount, the biosolubility can increase.

The inorganic fibers of the invention having the above composition can have fibrillization facility and good fiber state as well as alumina-reactivity resistance and biosolubility; or balanced alumina-reactivity resistance, biosolubility and fibrillization facility.

The inorganic fibers can be produced by a known method such as a fusion method, a sol-gel method or the like. In respect of a low cost, a fusion method is preferable. In the fusion method, fibers are prepared by preparing a melt of a raw material in the customary manner, and allowing the melt to be fibrous . For example, fibers can be prepared by a spinning method in which a melt flows onto a wheel which is rotating at a high speed, by a blowing method in which a molten raw material is exposed to compressed air or the like.

The average fiber diameter of the inorganic fibers of the invention is normally 0.1 to 50 µm, preferably, 0.5 to 20 µm, further preferably 1 to 10 µm, and most preferably 1 to 8 µm. The average fiber diameter may be adjusted to be an intended value by a known method such as the number of rotation, acceleration, compressed air pressure, wind, velocity, air flow or the like.

The inorganic fibers of the invention may or may not be subjected to a heat treatment.

If a heat treatment is conducted, it suffices that the temperature is a temperature at which the fiber shape be retained. Since the physical properties of the fiber vary by the heating temperature and the heating time, the fibers may be treated appropriately such that desired performance (creep resistance, shrinkage, strength, elasticity) can be exhibited.

The inorganic fibers change from amorphous to crystalline by a prescribed heat treatment. As mentioned above, it suffices that desired performance is exhibited. The inorganic fibers may be either amorphous or crystalline, or may be a state in which an amorphous part and a crystalline part are mixed.

The heating temperature is, for example, 100°C or more, 300°C or more, preferably 600°C or more, 800°C or more, further preferably 1000°C or more, 1200°C or more, 1300°C or more, or 1400°C or more. The heating temperature is preferably 600°C to 1400°C, further preferably 800°C to 1200°C, 800°C to 1000°C.

By having the above-mentioned composition, the inorganic fibers of the invention are dissolved in physiological saline having a pH of 4.5 or a pH of 7.4. Further, they have solubility after heating (after crystallizing).

The dissolution velocity constant (solubility) that is measured by the same method as used in Examples is preferably 10 ng/cm²·h or more, 30 ng/cm²·h or more, 50 ng/cm²·h or more, 100 ng/cm²·h or more, 150 ng/cm²·h or more, 200 ng/cm²·h or more, 300 ng/cm²·h or more, 500 ng/cm²·h or more, 1, 000 ng/cm²·h or more, and 1, 500 ng/cm²·h or more.

It is preferred that the inorganic fibers of the invention have low alumina-reactivity. Preferably the inorganic fibers do not react with alumina at 600°C. No reacting with alumina means that, by the method in Examples, an alumina pellet does not adhere to a fleece or a blanket made from the fibers.

The heat shrinkage of the fibers that is measured by the same method as used in the examples is preferably 50% or less, 45% or less, 40% or less, 35% or less, 30% or less, 25% or less, 20% or less, 15% or less, further preferably 10% or less, 8% or less, most preferably 5% or less at each temperature (600°C, 800°C, 1000°C, 1100°C, 1200°C, 1300°C, 1400°C, 1500°C, 1600°C).

Further, the number of kind of the essential components of the inorganic fibers of the invention can be small. Therefore, the number of mixing steps is decreased, leading to reduction in cost. Further, the small number of kind of components leads to relaxation of production difficulty when adjusting slightly the mixing amount.

Various secondary products can be obtained from the fibers of the invention. For example, a shaped product such as bulk, blanket, block, rope, yarn, text fabrics, fibers coated with a surfactant, shot-less bulk from which shot (un-fibrous product) has been reduced or removed, a board produced by using a solvent such as water, a mold, paper, felt, wet felt impregnated with colloidal silica, or the like can be obtained. Further, a shaped product obtained by treating these shaped products with colloid or the like can be obtained. Further, an unshaped product (mastic, caster, coating or the like) produced by using a solvent such as water can be obtained. In addition, a structural body obtained by combining the shaped product, the unshaped produced and various heating bodies can be obtained.

As specific applications of the fibers of the invention, a heat treating apparatus, a joint in a furnace such as an industrial furnace, an incinerator or the like, a joint which fills the gap of a refractory tile, an insulating brick, a shell, and a refractory mortar, a sealing material, a packing material, a cushion material, an insulating material, a refractory material, a fire proofing material, a heat-retention material, a protective material, a coating material, a filtering material, a filter material, an insulating material, a joint, a filler, a repairing material, a heat insulating material, a non-combustible material, a sound proof material, a sound absorbing material, a friction material (an additive for brake pad, for example), a glass plate/steel plate conveying roll, an automobile catalyst carrier retaining material, various fiber-reinforced composite materials (reinforcing fibers such as fiber-reinforced cement, fiber-reinforced plastics, or the like, reinforcing fibers such as a heat insulating material or a refractory material, an adhesive, a coating material or the like) can be given.

### EXAMPLES

Examples 1 to 39, Comparative Examples 1 to 3 and Reference Examples 1 to 4.

The fibers having the composition shown in Table 1 were prepared by the fusion method, and evaluated by the following methods . The results are shown in Table 2.

### (Heat resistance)

The heat shrinkage was measured to evaluate the heat resistance of the fibers.

The heat shrinkage of the fibers was measured by a method in which a fleece or a blanket (50 mm × 50 mm, thickness: 5 to 50 mm) was produced from fibers and fired for 8 hours at a specific temperature of 800°C to 1400°C.

On the surface of each sample thus produced, 2 or more platinum pins were nailed, and the distance between the platinum pins was measured before and after the heating. The change in dimension was taken as the heat shrinkage.

### (Alumina-reactivity)

About 1g of alumina powder having purity of 99% or more was press-molded by means of a mold having a diameter of 17 mm to obtain a pellet. The pellet was placed on a fleece or blanket-like sample (50 mm × 50 mm, thickness: 5 to 50 mm). The sample was heated to confirm the reactivity after the heating. The sample which did not react with the pellet at all are evaluated as good (○). The sample to which the pellet slightly adhered (the pellet could be peeled off easily by hands, and the pellet and the sample were not visually molten) were evaluated as fair (Δ). The sample which reacted with the pellet (the pellet and the sample were molten and adhered) were evaluated as poor (×).

### (Biosolubility)

The biosolubility of the unheated fibers was measured by the following method.

The fibers were placed on a membrane filter. On the fibers, physiological saline having a pH of 4.5 or 7.4 was added dropwise from a micro pump. The filtrate which has passed through the fibers and the filter was collected in a container. The collected filter was taken out after the passage of 24 hours. The eluent components were quantified by an ICP emission analyzer to calculate the solubility. The elements to be measured were four elements, i.e. K, Mg, Al and Si as main elements. The fiber diameter was measured and converted to the dissolution rate constant (unit: ng/cm²·h), which was the eluent amount per unit surface area and per unit time.

The average fiber diameter was measured by the following method.

After observing and photographing 400 or more fibers by an electron microscope. Thereafter, the diameter was measured for the photographed fibers, and the average value of all of the measured fibers was taken as the average fiber diameter.

### (Fibrillization facility)

Evaluation was made on fibrillization (forming a raw material to fiber) facility by the the fusion method. In Comparative Example 3, a raw molten material was formed to raw fiber with difficulty.

A case where a raw fiber aggregate (raw fiber), which was produced by the method and collected by a suction chamber, was formed to a fleece and to a blanket by needle-punching was evaluated as excellent (⊚), a case where the raw fiber was formed to a fleece and to a blanket by needle-punching with many large shots being contained was evaluated as good (○), and a case where the raw fiber and a fleece were obtained, but the raw fiber was not formed to a blanket by needle-punching and a case where no raw fiber was obtained were evaluated as poor (×).

### (Fiber state)

A case where the raw fiber was formed to a fleece and to a blanket by needle-punching, and the handling, flexibility and processability were good was evaluated as excellent (⊚).

A case where the raw fiber was formed to a fleece and to a blanket, and handling and flexibility were good, but the texture and processability were poor was evaluated as good (○).

A case where the raw fiber was formed to a fleece but not formed to a blanket, and the handling, flexibility and processability were good was evaluated as fair (Δ).

A case where the raw fiber was formed to a fleece but not formed to a blanket, and at least one of the handling, flexibility and processability was poor was evaluated as poor (×).

Poor processability means that when touching a fiber sample, fiber often sticks or tingles skin, or that many large shots are contained and drop from the sample like powder.

The fibers of Comparative Example 3 had a thick fiber diameter and many fibers stuck skin.

**Table 1-1**

| | Composition (wt%) | | | | | | | Composition (mol%) | | | | | | | Mole Ratio |
|---|---|---|---|---|---|---|---|---|---|---|---|---|---|---|---|
| | Na2O | K2O | MgO | Al2O3 | SiO2 | CaO | Fe203 | Na2O | K2O | MgO | Al2O3 | SiO2 | CaO | Fe203 | K2O/Al2O3 |
| Example 1 | 0.2 | 5.9 | 13.4 | 28.7 | 51.3 | 0.3 | 0.1 | 0.3 | 4.0 | 21.6 | 18.3 | 55.4 | 0.3 | 0.1 | 0.22 |
| Example 2 | 0.2 | 16.9 | 12.7 | 24.5 | 45.2 | 0.3 | 0.1 | 0.3 | 12.0 | 21.0 | 16.1 | 50.3 | 0.3 | 0.1 | 0.75 |
| Example 3 | 0.2 | 16.5 | 12.8 | 26.4 | 43.7 | 0.3 | 0.1 | 0.2 | 11.8 | 21.3 | 17.4 | 48.9 | 0.3 | 0.1 | 0.68 |
| Example 4 | 0.2 | 16.9 | 12.6 | 28.4 | 41.4 | 0.3 | 0.1 | 0.2 | 12.2 | 21.3 | 19.0 | 46.9 | 0.3 | 0.1 | 0.64 |
| Example 5 | 0.2 | 17.1 | 12.8 | 29.2 | 40.1 | 0.3 | 0.1 | 0.3 | 12.4 | 21.8 | 19.6 | 45.6 | 0.4 | 0.1 | 0.63 |
| Example 6 | | 17.2 | 13.0 | 30.3 | 39.1 | 0.3 | 0.1 | | 12.5 | 22.2 | 20.3 | 44.6 | 0.3 | 0.1 | 0.62 |
| Example 7 | 0.2 | 17.6 | 13.2 | 30.2 | 38.3 | 0.3 | 0.1 | 0.2 | 12.8 | 22.4 | 20.3 | 43.7 | 0.4 | 0.1 | 0.63 |
| Example 8 | 0.3 | 18.6 | 13.0 | 28.7 | 39.0 | 0.3 | 0.1 | 0.3 | 13.6 | 22.0 | 19.3 | 44.5 | 0.4 | 0.1 | 0.70 |
| Example 9 | 0.3 | 21.5 | 12.3 | 23.3 | 42.1 | 0.3 | 0.2 | 0.3 | 15.5 | 20.7 | 15.5 | 47.5 | 0.4 | 0.1 | 1.00 |
| Example 10 | 0.2 | 21.9 | 12.5 | 21.9 | 43.0 | 0.3 | 0.2 | 0.3 | 15.6 | 20.9 | 14.5 | 48.3 | 0.3 | 0.1 | 1.08 |
| Example 11 | | 23.4 | 12.5 | 20.8 | 42.8 | 0.3 | 0.1 | 0.0 | 16.8 | 20.9 | 13.8 | 48.1 | 0.3 | | 1.22 |
| Example 12 | 0.2 | 23.7 | 12.5 | 22.0 | 41.1 | 0.3 | 0.1 | 0.2 | 17.1 | 21.1 | 14.7 | 46.5 | 0.4 | 0.1 | 1.16 |
| Example 13 | 0.2 | 24.4 | 12.2 | 22.6 | 40.2 | 0.3 | 0.1 | 0.2 | 17.7 | 20.7 | 15.2 | 45.8 | 0.3 | 0.1 | 1.17 |
| Example 14 | 0.2 | 24.1 | 12.8 | 23.3 | 39.2 | 0.3 | 0.1 | 0.2 | 17.5 | 21.7 | 15.6 | 44.6 | 0.4 | 0.1 | 1.12 |
| Example 15 | | 24.8 | 12.7 | 24.8 | 37.3 | 0.3 | 0.1 | | 18.2 | 21.8 | 16.8 | 42.9 | 0.4 | 0.1 | 1.08 |
| Example 16 | 0.2 | 26.1 | 12.4 | 25.5 | 35.4 | 0.2 | 0.1 | 0.2 | 19.3 | 21.5 | 17.5 | 41.1 | 0.3 | 0.1 | 1.11 |
| Example 17 | 0.2 | 26.3 | 12.3 | 26.4 | 34.3 | 0.3 | 0.1 | 0.2 | 19.6 | 21.4 | 18.2 | 40.1 | 0.4 | 0.1 | 1.08 |
| Example 18 | 0.2 | 26.6 | 12.3 | 26.8 | 33.6 | 0.3 | 0.1 | 0.3 | 19.9 | 21.5 | 18.5 | 39.4 | 0.4 | | 1.07 |
| Example 19 | 0.2 | 26.7 | 12.3 | 27.7 | 32.6 | 0.3 | 0.1 | 0.3 | 20.1 | 21.6 | 19.2 | 38.4 | 0.4 | 0.1 | 1.04 |

**Table 1-2**

| | Composition (wt%) | | | | | | | Composition (mol%) | | | | | | | Mole Ratio |
|---|---|---|---|---|---|---|---|---|---|---|---|---|---|---|---|
| | Na2O | K2O | MgO | Al2O3 | SiO2 | CaO | Fe2O3 | Na2O | K2O | MgO | Al2O3 | SiO2 | CaO | Fe2O3 | K2O/Al2O3 |
| Example 20 | 0.3 | 27.1 | 11.9 | 28.3 | 32.0 | 0.3 | 0.1 | 0.4 | 20.5 | 21.0 | 19.8 | 37.9 | 0.4 | | 1.04 |
| Example 21 | 0.2 | 28.3 | 11.6 | 28.7 | 30.6 | 0.3 | 0.1 | 0.3 | 21.6 | 20.7 | 20.3 | 36.7 | 0.4 | 0.1 | 1.07 |
| Example 22 | 0.2 | 27.8 | 12.1 | 29.1 | 30.4 | 0.3 | 0.1 | 0.2 | 21.1 | 21.5 | 20.5 | 36.3 | 0.4 | 0.1 | 1.03 |
| Example 23 | 0.2 | 29.1 | 12.0 | 29.3 | 28.9 | 0.3 | 0.1 | 0.2 | 22.3 | 21.5 | 20.8 | 34.8 | 0.3 | | 1.08 |
| Example 24 | 0.2 | 27.0 | 12.7 | 29.6 | 30.0 | 0.3 | 0.1 | 0.2 | 20.5 | 22.5 | 20.7 | 35.7 | 0.4 | 0.1 | 0.99 |
| Example 25 | 0.3 | 22.9 | 12.5 | 30.5 | 33.3 | 0.3 | 0.1 | 0.3 | 17.1 | 21.9 | 21.1 | 39.1 | 0.4 | 0.1 | 0.81 |
| Example 26 | 0.2 | 12.7 | 12.9 | 33.1 | 40.6 | 0.3 | 0.1 | 0.3 | 9.2 | 21.8 | 22.2 | 46.1 | 0.4 | 0.1 | 0.42 |
| Example 27 | 0.2 | 8.0 | 13.5 | 33.7 | 44.2 | 0.3 | 0.1 | 0.2 | 5.6 | 22.4 | 22.1 | 49.2 | 0.4 | 0.1 | 0.26 |
| Example 28 | 0.2 | 5.5 | 13.6 | 34.0 | 46.3 | 0.4 | 0.1 | 0.2 | 3.9 | 22.3 | 22.1 | 51.0 | 0.4 | 0.1 | 0.17 |
| Example 29 | | 14.1 | 7.8 | 48.2 | 29.7 | 0.2 | 0.1 | | 11.4 | 14.7 | 36.0 | 37.6 | 0.3 | | 0.32 |
| Example 30 | | 13.2 | 8.6 | 48.2 | 29.7 | 0.2 | 0.1 | | 10.6 | 16.1 | 35.7 | 37.3 | 0.2 | 0.1 | 0.30 |
| Example 31 | | 12.6 | 8.6 | 53.9 | 24.6 | 0.2 | 0.1 | | 10.4 | 16.6 | 41.0 | 31.7 | 0.3 | 0.1 | 0.25 |
| Example 32 | | 11.9 | 8.6 | 58.5 | 20.7 | 0.2 | 0.1 | | 10.0 | 16.9 | 45.4 | 27.3 | 0.3 | 0.1 | 0.22 |
| Example 33 | | 12.0 | 8.6 | 59.8 | 19.2 | 0.3 | 0.2 | | 10.2 | 17.0 | 46.8 | 25.6 | 0.4 | 0.1 | 0.22 |
| Example 34 | | 11.6 | 8.8 | 60.6 | 18.7 | 0.2 | 0.1 | | 9.9 | 17.4 | 47.5 | 24.8 | 0.3 | 0.1 | 0.21 |
| Example 35 | | 11.8 | 9.1 | 61.1 | 17.6 | 0.2 | 0.2 | | 10.0 | 18.1 | 48.0 | 23.4 | 0.4 | 0.1 | 0.21 |
| Example 36 | | 11.9 | 9.2 | 61.6 | 16.9 | 0.2 | 0.1 | | 10.1 | 18.3 | 48.5 | 22.6 | 0.4 | 0.1 | 0.21 |
| Example 37 | | 11.8 | 10.1 | 62.3 | 15.3 | 0.3 | 0.2 | | 10.0 | 20.2 | 48.9 | 20.4 | 0.4 | 0.1 | 0.21 |
| Example 38 | | 11.4 | 10.0 | 63.2 | 15.0 | 0.3 | 0.1 | | 9.7 | 20.0 | 49.8 | 20.0 | 0.4 | 0.1 | 0.19 |
| Example 39 | | 11.2 | 10.0 | 64.8 | 13.6 | 0.3 | 0.2 | | 9.6 | 20.1 | 51.5 | 18.3 | 0.4 | 0.1 | 0.19 |
| Comparative Exam. 1 | | | 0.3 | 2.3 | 72.4 | 24.7 | 0.1 | | | 0.4 | 1.3 | 71.9 | 26.3 | | - |
| Comparative Exam. 2 | 0.3 | | | 49.1 | 50.7 | 0.2 | | 0.4 | | | 36.1 | 63.2 | 0.3 | | - |
| Comparative Exam. 3 | | 24.1 | | 27.9 | 47.9 | | 0.1 | | 19.3 | | 20.6 | 60.1 | | | 0.94 |
| Reference Example 1 | 0.2 | 16.2 | 12.2 | 19.4 | 51.5 | 0.3 | 0.1 | 0.2 | 11.2 | 19.8 | 12.4 | 55.9 | 0.4 | 0.1 | 0.90 |
| Reference Example 2 | | 17.3 | 13.2 | 18.2 | 50.9 | 0.3 | 0.1 | | 11.9 | 21.2 | 11.6 | 55.0 | 0.3 | 0.1 | 1.03 |
| Reference Example 3 | 0.2 | 17.2 | 12.9 | 18.5 | 50.7 | 0.4 | 0.1 | 0.2 | 11.9 | 20.7 | 11.8 | 54.9 | 0.4 | 0.1 | 1.01 |
| Reference Example 4 | 0.2 | 24.3 | 12.3 | 15.1 | 47.6 | 0.3 | 0.1 | 0.2 | 17.1 | 20.2 | 9.8 | 52.3 | 0.4 | 0.1 | 1.74 |

**Table 2-1**

| | 8h heat shrinkage | | | | Average fiber diameter (µm) | Solubility(ng/cm2·h) | | Alumina reactivity | | | | Fibrillization facility | Fiber state |
|---|---|---|---|---|---|---|---|---|---|---|---|---|---|
| | 800°C | 1000°C | 1200°c | 1400°C | | PH4.5 | PH7.5 | 1000°C | 1200°C | 1300°C | 1400°C | | |
| Example 1 | | 69.9 | | | | | | | | | | ⊚ | ⊚ |
| Example 2 | | | | | | | | | | | | ⊚ | ⊚ |
| Example 3 | | 52.1 | | 66.2 | 4.24 | 3573 | 62 | ○ | ○ | ○ | ○ | ⊚ | ⊚ |
| Example 4 | | | | | | | | | | | | ⊚ | ⊚ |
| Example 5 | | | | 70.9 | | | | | | | | ⊚ | ⊚ |
| Example 6 | | | | 69.7 | | | | | | | | ⊚ | ⊚ |
| Example 7 | | | | 65.6 | | | | | | | | ⊚ | ⊚ |
| Example 8 | | 50.7 | | 53.7 | | | | | | | | ⊚ | ⊚ |
| Example 9 | | | | 22.8 | | | | | | | | ⊚ | ⊚ |
| Example 10 | | 20.5 | | 22.0 | 4.44 | 4525 | 69 | ○ | ○ | ○ | ○ | ⊚ | ⊚ |
| Example 11 | | | | 22.4 | | | | | | | | ⊚ | ⊚ |
| Example 12 | | 22.3 | | 22.2 | | | | | | | | ⊚ | ⊚ |
| Example 13 | | | | 22.0 | | | | | | | | ⊚ | ⊚ |
| Example 14 | | | | 16.3 | 4.62 | 7375 | 70 | ○ | ○ | ○ | ○ | ⊚ | ⊚ |
| Example 15 | | 16.0 | | 12.0 | | | | | | | | ⊚ | ⊚ |
| Example 16 | | 10.2 | | 7.2 | 4.21 | 4146 | 95 | ○ | ○ | ○ | ○ | ⊚ | ⊚ |
| Example 17 | | 6.6 | | 9.2 | | | | | | | | ⊚ | ⊚ |
| Example 18 | | 5.5 | | 9.6 | | | | | | | | ⊚ | ⊚ |
| Example 19 | | 7.0 | | 11.1 | 3.78 | 4341 | 120 | ○ | ○ | ○ | ○ | ⊚ | ⊚ |

**Table 2-2**

| | 8h heat shrinkage | | | | Average fiber diameter (µm) | Solubility(ng/cm2·h) | | Alumina reactivity | | | | Fibrillization facility | Fiber state |
|---|---|---|---|---|---|---|---|---|---|---|---|---|---|
| | 800°C | 1000°C | 1200°C | 1400°C | | PH4.5 | PH7.5 | 1000°C | 1200°C | 1300°C | 1400°C | | |
| Example 20 | | 8.4 | | 13.9 | | | | | | | | ⊚ | ⊚ |
| Example 21 | | 9.3 | | 12.2 | | | | | | | | ⊚ | ⊚ |
| Example 22 | | 9.7 | | 13.8 | | | | | | | | ⊚ | ⊚ |
| Example 23 | | 12.2 | | 13.0 | 3.67 | 3618 | 198 | ○ | ○ | ○ | ○ | ⊚ | ⊚ |
| Example 24 | | 9.6 | | 26.8 | | | | | | | | ⊚ | ⊚ |
| Example 25 | | 11.3 | | 37.7 | | | | | | | | ⊚ | ⊚ |
| Example 26 | | 11.2 | | 67.2 | | | | | | | | ⊚ | ⊚ |
| Example 27 | | | | | | | | | | | | ⊚ | ⊚ |
| Example 28 | | | | 69.9 | | | | | | | | ⊚ | ⊚ |
| Example 29 | 17.1 | | | 20.8 | | | | | | | | ⊚ | ⊚ |
| Example 30 | 21.6 | | | 26.6 | | | | | | | | ⊚ | ⊚ |
| Example 31 | 8.0 | | | 11.4 | | | | | | | | ⊚ | ⊚ |
| Example 32 | 5.4 | | | 11.6 | | | | | | | | ⊚ | ⊚ |
| Example 33 | 5.4 | | | 10.6 | | | | | | | | ⊚ | ⊚ |
| Example 34 | 4.0 | 6.9 | | 10.3 | 5.86 | 1086 | 38 | ○ | ○ | ○ | ○ | ⊚ | ⊚ |
| Example 35 | 4.6 | | | 9.0 | | | | | | | | ⊚ | ⊚ |
| Example 36 | 4.6 | | | 11.1 | | | | | | | | ⊚ | ⊚ |
| Example 37 | 5.2 | | | 11.5 | | | | | | | | ⊚ | ⊚ |
| Example 38 | 5.7 | | | 12.3 | | | | | | | | ⊚ | ⊚ |
| Example 39 | 5.1 | 5.1 | | 12.1 | | | | | | | | ⊚ | ⊚ |
| Comparative Exam. 1 | | 0.6 | 1.8 | 13.6 | 3.3 | | 201 | ○ | Δ | × | × | ⊚ | ⊚ |
| Comparative Exam. 2 | | 1.6 | 3.1 | 4.8 | 2.0 | 5 | 1 | ○ | ○ | ○ | ○ | ⊚ | ⊚ |
| Comparative Exam. 3 | | 0.5 | 2.1 | 0.2 | 67.2 | 3142 | 105 | ○ | ○ | ○ | ○ | × | × |
| Reference Example 1 | | 29.4 | | | | | | | | | | ⊚ | ⊚ |
| Reference Example 2 | | | | 34.5 | | | | | | | | ⊚ | ⊚ |
| Reference Example 3 | | | | | | | | | | | | ⊚ | ⊚ |
| Reference Example 4 | | | | | | | | | | | | ⊚ | ⊚ |

### Industrial Applicability

The inorganic fibers of the invention can be used for various purposes as a heat insulating material or a substitute for asbestos.

Although only some exemplary embodiments and/or examples of this invention have been described in detail above, those skilled in the art will readily appreciate that many modifications are possible in the exemplary embodiments and/or examples without materially departing from the novel teachings and advantages of this invention.

## Claims

1. Inorganic fibers comprising K₂O, MgO, SiO₂ and Al₂O₃, wherein among all components contained in the inorganic fibers, the four components which have the largest contents (wt%) are K₂O, MgO, SiO₂ and Al₂O₃, and the amounts of K₂O, MgO, SiO₂ and Al₂O₃ satisfy the following composition:
K₂O: 5 to 30 wt%,
MgO: 5 to 30 wt%,
Al₂O₃: 20 to 65 wt%, and
SiO₂: 10 to 52 wt%.

2. The inorganic fibers according to claim 1, wherein the total of K₂O, MgO, SiO₂ and Al₂O₃ is 95 wt% or more.

3. The inorganic fibers according to claim 1, which satisfy the following composition:
K₂O: 22 to 30 wt%,
MgO: 9 to 15 wt%,
Al₂O₃: 21 to 32 wt%, and
SiO₂: 26 to 42 wt%.

4. The inorganic fibers according to claim 1, which satisfy the following composition:
K₂O: 8 to 15 wt%,
MgO: 6 to 12 wt%,
Al₂O₃: 51 to 65 wt%, and
SiO₂: 11 to 27 wt%.

5. The inorganic fibers according to claim 1, which satisfy the following composition:
K₂O: 24 to 30 wt%,
MgO: 11 to 13 wt%,
Al₂O₃: 23 to 30 wt%, and
SiO₂: 28 to 40 wt%.

6. The inorganic fibers according to any one of claims 1 to 5, wherein the mole ratio of K₂O and Al₂O₃, K₂O/Al₂O₃ is 0.6 to 1.25.

7. The inorganic fibers according to any one of claims 1 to 5, wherein the mole ratio of K₂O and Al₂O₃, K₂O/Al₂O₃ is 0.4 or less.

8. The inorganic fibers according to any one of claims 1 to 7, which comprise MgO; or MgO and at least one selected from Na₂O, K₂O, CaO and BaO; in the following amount:
Na₂O+K₂O+MgO+CaO+BaO > 18 wt%.

9. The inorganic fibers according to any one of claims 1 to 8, which do not comprise B₂O₃ in an amount equal to or more than an impurity amount.

10. The inorganic fibers according to any one of claims 1 to 9, which do not react with alumina at 600°C.

11. The inorganic fibers according to any one of claims 1 to 10, which have an average fiber diameter of 10 µm or less.

12. The inorganic fibers according to any one of claims 1 to 11, which have a solubility of 10 ng/cm²·h or more in physiological saline having a pH of 4.5 or a pH of 7.4.

13. A secondary product or a composite material produced by using the inorganic fibers according to any one of claims 1 to 12.

## Patentansprüche

1. Anorganische Fasern umfassend K₂O, MgO, SiO₂ und Al₂O₃, wobei unter allen Komponenten, welche in den anorganischen Fasern enthalten sind, die vier Komponenten mit den grössten Gehalten (Gew.-%) K₂O, MgO, SiO₂ und Al₂O₃ sind, und die Mengen an K₂O, MgO, SiO₂ und Al₂O₃ die folgende Zusammensetzung erfüllen:
K₂O: 5 bis 30 Gew.-%,
MgO: 5 bis 30 Gew.-%,
Al₂O₃: 20 bis 65 Gew.-%, und
SiO₂: 10 bis 52 Gew.-%.

2. Anorganische Fasern gemäss Anspruch 1, wobei die Summe von K₂O, MgO, SiO₂ und Al₂O₃ 95 Gew.-% oder mehr ist.

3. Anorganische Fasern gemäss Anspruch 1, welche die folgende Zusammensetzung erfüllen:
K₂O: 22 bis 30 Gew.-%,
MgO: 9 bis 15 Gew.-%,
Al₂O₃: 21 bis 32 Gew.-%, und
SiO₂: 26 bis 42 Gew.-%.

4. Anorganische Fasern gemäss Anspruch 1, welche die folgende Zusammensetzung erfüllen:
K₂O: 8 bis 15 Gew.-%,
MgO: 6 bis 12 Gew.-%,
Al₂O₃: 51 bis 65 Gew.-%, und
SiO₂: 11 bis 27 Gew.-%.

5. Anorganische Fasern gemäss Anspruch 1, welche die folgende Zusammensetzung erfüllen:
K₂O: 24 bis 30 Gew.-%,
MgO: 11 bis 13 Gew.-%,
Al₂O₃: 23 bis 30 Gew.-%, und
SiO₂: 28 bis 40 Gew.-%.

6. Anorganische Fasern gemäss einem der Ansprüche 1 bis 5, wobei das Molverhältnis von K₂O und Al₂O₃, K₂O/Al₂O₃ 0.6 bis 1.25 ist.

7. Anorganische Fasern gemäss einem der Ansprüche 1 bis 5, wobei das Molverhältnis von K₂O und Al₂O₃, K₂O/Al₂O₃ 0.4 oder weniger ist.

8. Anorganische Fasern gemäss einem der Ansprüche 1 bis 7, welche MgO umfassen; oder MgO und mindestens eines ausgewählt aus Na₂O, K₂O, CaO und BaO; in der folgenden Menge:
Na₂O + K₂O + MgO + CaO+ BaO > 18 Gew.-%.

9. Anorganische Fasern gemäss einem der Ansprüche 1 bis 8, welche kein B₂O₃ in einer Menge, die gleich wie oder grösser als eine Verunreinigungsmenge ist, aufweist.

10. Anorganische Fasern gemäss einem der Ansprüche 1 bis 9, welche nicht mit Aluminiumoxid bei 600 °C reagieren.

11. Anorganische Fasern gemäss einem der Ansprüche 1 bis 10, welche einen Durchschnittsfaserdurchmesser von 10 µm oder weniger haben.

12. Anorganische Fasern gemäss einem der Ansprüche 1 bis 11, welche eine Löslichkeit von 10 ng/cm²•h oder mehr in physiologischer Salzlösung mit einem pH von 4.5 oder einem pH von 7.4 haben.

13. Ein Sekundärprodukt oder ein Verbundmaterial hergestellt unter Verwendung der anorganischen Fasern gemäss einem der Ansprüche 1 bis 12.

## Revendications

1. Fibre inorganiques comprenant K₂O, MgO, SiO₂ et Al₂O₃ dans lesquelles parmi toutes les composantes contenues dans les fibres inorganiques, les quatre composantes qui ont le contenu le plus important (% en poids) sont K₂O, MgO, SiO₂ et Al₂O₃, et les quantités de K₂O, MgO, SiO₂ et Al₂O₃ satisfaisant la composition suivante :
| | |
|---|---|
| K₂O : | 5 à 30 % en poids, |
| MgO : | 5 à 30 % en poids, |
| Al₂O₃ : | 20 à 65 % en poids, et |
| SiO₂ : | 10 à 52 % en poids. |

2. Les fibres inorganiques selon la revendication 1, dans lesquelles le total de K₂O, MgO, SiO₂ et Al₂O₃ est de 95% en poids ou plus.

3. Les fibres inorganiques selon la revendication 1, satisfaisant la composition suivante :
| | |
|---|---|
| K₂O : | 22 à 30 % en poids, |
| MgO : | 9 à 15 % en poids, |
| Al₂O₃ : | 21 à 32 % en poids, et |
| SiO₂ : | 26 à 42 % en poids. |

4. Les fibres inorganiques selon la revendication 1, satisfaisant la composition suivante :
| | |
|---|---|
| K₂O : | 8 à 15 % en poids |
| MgO : | 6 à 12 % en poids |
| Al₂O₃ : | 51 à 65 % en poids, et |
| SiO₂ : | 11 à 27 % en poids. |

5. Les fibres inorganiques selon la revendication 1, satisfaisant la composition suivante :
| | |
|---|---|
| K₂O : | 24 à 30 % en poids |
| MgO : | 11 à 13 % en poids |
| Al₂O₃ : | 23 à 30 % en poids, et |
| SiO₂ : | 28 à 40 % en poids. |

6. Les fibres inorganiques selon l'une quelconque des revendications 1 à 5, dans lesquelles le rapport molaire entre K₂O et Al₂O₃, K₂O / Al₂O₃ est 0.6 à 1.25.

7. Les fibres inorganiques selon l'une quelconque des revendications 1 à 5, dans lesquelles le rapport molaire entre K₂O et Al₂O₃, K₂O / Al₂O₃ est 0.4 ou moins.

8. Les fibres inorganiques selon l'une quelconque des revendications 1 à 7, qui comprennent MgO ; ou MgO et au moins un choisi parmi Na₂O, K₂O, CaO et BaO ; dans les quantités suivantes :
Na₂O + K₂O + MgO + CaO + BaO > 18% en poids.

9. Les fibres inorganiques selon l'une quelconque des revendications 1 à 8, qui ne comprennent pas de B₂O₃ en une quantité égale ou supérieure à une quantité d'impureté.

10. Les fibres inorganiques selon l'une quelconque des revendications 1 à 9, qui ne réagissent pas avec l'alumina à 600 °C.

11. Les fibres inorganiques selon l'une quelconque des revendications 1 à 10, qui ont un diamètre moyen de fibre de 10 µm ou moins.

12. Les fibres inorganiques selon l'une quelconque des revendications 1 à 11, qui ont une solubilité de 10 ng/cm²·h ou plus dans une solution saline physiologique ayant un pH de 4.5 ou un pH de 7.4.

13. Un produit secondaire ou un matériau composite produit en utilisant les fibres inorganiques selon l'une quelconque des revendications 1 à 12.
